# EUROPEAN PATENT APPLICATION

(11) **EP 1 949 833 A1**
(43) Date of publication of application: **30.07.2008**
(21) Application number: 08100938.3
(22) Date of filing: 25.01.2008
(51) Int. Cl.: A47J 47/01, B65D 83/04

(54) **Device for storing stimulant packed in filter paper**

(30) Priority: 26.01.2007 NL 1033285
(71) Applicant: DPS Techniek, 4521 PV Biervliet (NL)
(72) Inventor: Van Wijck, Dick, 4521 PV, Biervliet (NL)
(74) Representative: Uittenbogaart, Gustaaf Adolf

(57) **Abstract**

The invention relates to a device for storing a number of parcels (4) made of filter paper of constant dimensions containing luxury foods, such as coffee or tea, comprising a container (3) in which the parcels (4) are stacked on top of one another in a stack (S) and a first lid (1) for closing off the container (3) in a more or less airtight manner. According to the invention, the bottom of the container (3) is provided with a removal opening with a top edge which is at the same level as the top of the bottommost parcel (4), as a result of which a parcel (4) can be taken from the bottom of the stack (S).

## Description

The invention relates to a device in accordance with the preamble of Claim 1. Such devices for storing parcels made of filter paper and containing coffee or tea, also known as coffee pads or tea pads, are known. The drawback of the known devices is that the user removes the parcels from the container arbitrarily, as a result of which some parcels stay in the container for a much longer period than others. As the quality of the luxury foods decreases with prolonged storage, the parcels which are removed from the known device vary in quality and include parcels which have been stored in the container for too long. In order to overcome this drawback, the device is designed in accordance with Claim 1. Consequently, in each case the bottommost parcel from the stack can be taken from the removal opening, as a result of which no parcels are stored in the container for an unnecessarily long period of time.

According to one embodiment, the device is designed in accordance with Claim 2. By also closing off the removal opening with a lid, the container is closed off in a more or less airtight manner, as a result of which the quality of the stored parcels is maintained for a longer period of time.

According to one embodiment, the device is designed in accordance with Claim 3. As a result, the user is able to remove a parcel which is at the bottom of the stack in a simple manner.

According to one embodiment, the device is designed in accordance with Claim 4. As a result, the drawer can be pushed back underneath the stack without disturbing the stack of parcels, after which a subsequent parcel can be dropped into the drawer.

According to one embodiment, the device is designed in accordance with Claim 5. In this embodiment, the flat panel, in the first position, is situated next to the stack and passes under the stack when the parcel is moved outwards, as a result of which the flat panel supports the stack of parcels in a simple manner and the stack remains positioned above the drawer.

According to one embodiment, the device is designed in accordance with Claim 6. As a result, the support means can be designed in such a manner that they are short in the first position and have the required greater length in the second position and are able to bridge a larger distance so that the support means remain inside the container and near the stack of parcels when the drawer is in the first position. Consequently, the dimensions of the support means remain small and they do not have to protrude outside the container. As the support means do not protrude outside the container, the latter can be attached to the wall if the drawer moves at right angles to the wall.

According to one embodiment, the device is designed in accordance with Claim 7. As a result, the drawer automatically moves back into the first position in a simple manner when it is released, so that a subsequent parcel can be removed from the container.

According to one embodiment, the device is designed in accordance with Claim 8. As a result, the container is closed off in an airtight manner by means of spring force, which preserves the quality of the luxury foods.

According to one embodiment, the device is designed in accordance with Claim 9. As a result, the drawer is pushed forward as the second lid is opened, so that the parcel can be removed immediately. This simplifies use of the device.

According to one embodiment, the device is designed in accordance with Claim 10. As a result, the coupling means can be installed in the container in a compact manner and can, if desired, also be combined with the first flexible strip which forms part of the supporting means.

The invention will be explained below with reference to an exemplary embodiment by means of a drawing, in which:
Fig. 1 shows a perspective view of a container for coffee pads, in which Fig. 1a shows a lid and Fig. 1b a container for coffee pads onto which the lid from Fig. 1a can be placed;
Fig. 2 shows a perspective cross section of the closed container from Fig. 1 filled with a few coffee pads; and
Fig. 3 shows a perspective cross section according to Fig. 2 in which the container is open at the bottom for removing a coffee pad.

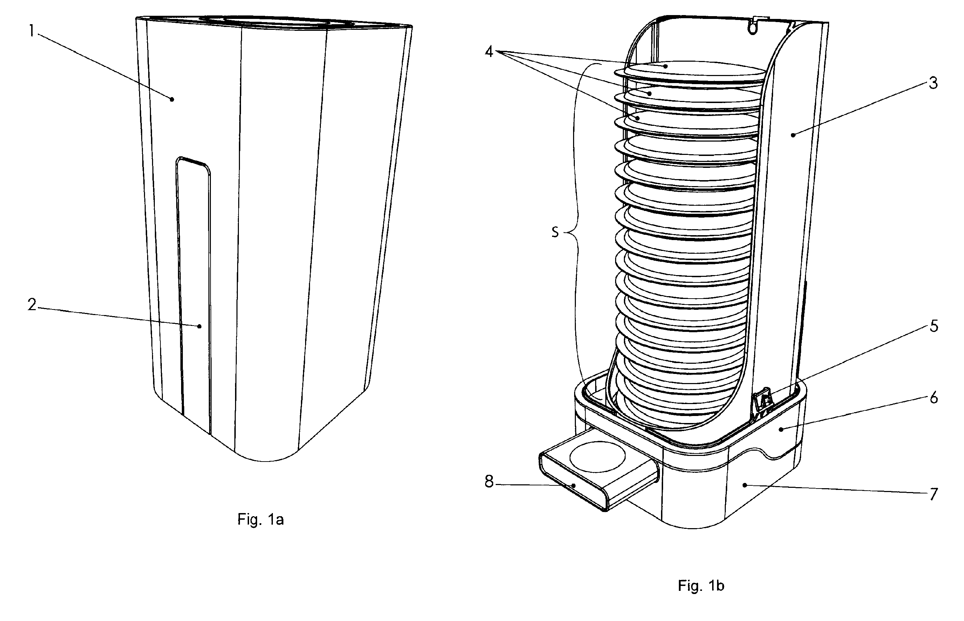

Fig. 1 shows a device with a base 6 which can be attached to a wall, and a container 3 attached thereto on the base 6. The container 3 is designed in such a manner that the container 3 supports the coffee pads 4 stacked inside in such a manner that the stack S of coffee pads 4 does not topple over. A lid 1 can be placed on the base 6, as a result of which the coffee pads 4 are stored in a space which is more or less airtight. The lid 1 can be secured to the base using clamps 5. By means of a window 2 in the lid 1, it is possible to see how many coffee pads 4 remain in the container 3.

In this exemplary embodiment, the storage of coffee pads 4 is illustrated. Coffee pads 4 are parcels in which ground coffee is packaged between two circular sheets of filter paper, with the parcels all having the same dimensions since they are intended to be used in the same apparatus. It is also possible to package tea or other luxury foods between the sheets of filter paper instead of coffee. These parcels can also be stored in the device described in this document.

A flap 7 with an operating handle 8 is attached to the bottom of the base 6. By pushing the operating handle 8 down, the coffee pad 4 which is bottommost in the stack S is pushed forward in the manner described below and can be removed from the container 3 by the user. By removing the lid 1 from the base 6, it is possible to place new coffee pads 4 in the container 3, with the freshest pads 4 being placed on top of the stack S and the bottommost pads being used first. Thus, coffee pads 4 are being prevented from inadvertently remaining in the container 3 for too long.

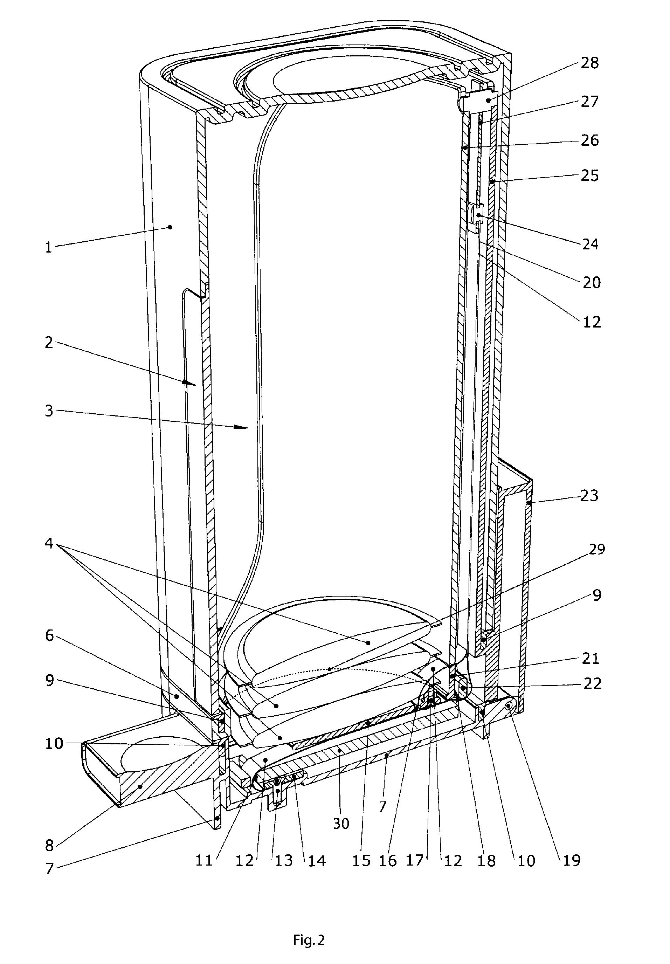

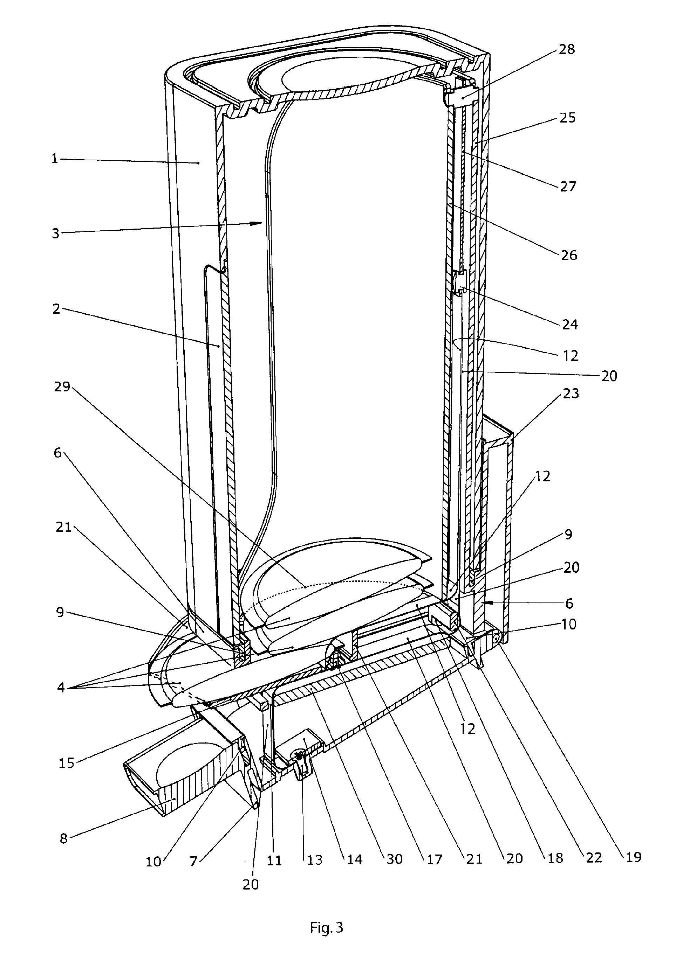

Figs. 2 and 3 show the device in cross section during storage of coffee pads 4 and removal of a coffee pad 4, respectively. The container 3 has an inner wall 26 and an outer wall 25 which are connected to one another. At the top of the base 6, a seal 9 is attached on the outer periphery. The lid 1 rests on this seal 9 and the seal 9 is designed in such a manner that it ensures a more or less airtight sealing. On the back, a bracket 23 is attached to the outer wall 25 and the device is attached to a wall by means of this bracket 23. The flap 7 can be pushed down by means of the operating handle 8, the flap 7 being attached to the base 6 by means of a hinge pin 19 and being able to rotate downwards when the operating lever 8 is pushed down. The inner wall 26 has a bottom edge 29 which runs parallel to a bottom surface 30 of the base 6. The bottom edge 29 is disposed in such a manner that a bottommost coffee pad 4 in the stack S can pass underneath and the coffee pad 4 which is on top of the bottommost coffee pad 4 is thereby retained.

When the flap 7 is pressed down, an opening is unblocked at the front, through which a drawer, which consists of a drawer bottom 15 and a raised drawer edge 21, can emerge. The top of this opening is at the same level as the bottom edge 29 along the entire width of the drawer edge 21. The drawer 15, 21 moves over the bottom surface 30 and/or is guided in guides. While the drawer 15, 21 moves outwards, the bottommost coffee pad 4 is pushed out by the drawer edge 21 and can be removed from the drawer 15, 21 by the user. The drawer edge 21 is preferably designed in such a manner that the coffee pads 4 can be removed from the drawer in a simple manner at the front of the drawer when it is opened.

The flap 7 is pulled against the base 6 by a first strip 12 and a second strip 20 and the movements of the flap 7 and the drawer 15, 21 are linked by the second strip 20. Near the front, the ends of the first strip 12 and the second strip 20 are attached to the flap 7 and are secured thereto by clamping a clamping plate 14 with a screw 13 against the flap 7. The first strip 12 passes through an opening 11 in the bottom surface 30 under the drawer bottom 15 to an opening 16 in the drawer bottom 15 and to the top of the drawer edge 21. Then, the first strip 12 runs across the drawer edge 21 under the bottom edge 29 of the inner wall 26 across an upright edge 22 of the base 6 into the space between the inner wall 26 and the outer wall 25 and then upwards. The second strip 20 runs underneath the drawer bottom 15 and is secured to the underside of the drawer bottom 15 by means of a screw 17 and runs upwards from the bottom through an opening 18 to the space between the inner wall 26 and the outer wall 25. Both the first strip 12 and the second strip 20, which are, for example, made of braided or smooth plastic strips, are connected to a resilient element 27 by means of a coupling piece 24, which resilient element 27 rests on the inner wall 26 and the outer wall 25 by means of a coupling piece 28. As a result, the first strip 12 and the second strip 20 are tensioned and the flap 7 is pulled against the base 6 when the operating handle 8 is released. At the same time the drawer 15, 21 is pulled underneath the stack S of coffee pads 4.

Once the drawer 15, 21 is disposed under the stack S and the drawer edge 21 is more or less disposed under the inner wall 26, the next coffee pad 4 lands in the drawer 15, 21. As long as the drawer 15, 21 is in the pushed-out position, the first strip 12 which is tensioned by the resilient element 27 runs from the drawer edge 21 to the inner wall 26 and the upright edge 22 of the base 6 and thus prevents a coffee pad 4 from ending up between the drawer edge 21 and the inner wall 26. The first strip 12 is sufficiently wide for this purpose. The flap 7 is pulled upwards by both the first strip 12 and the second strip, as a result of which a seal 10 between the base 6 and the flap 7 seals the space in which the coffee pads 4 are stored in a more or less airtight manner. To this end, the seal 10 is made of, for example, a soft material.

The resilient element is shown in Figs. 2 and 3 as an elastic rubber band. The resilient element 27 may also be in a different form, for example as a coiled spring. The flap 7 may also be provided with a spring which presses the flap 7 directly against the bottom of the base 6. The connection between the movement of the flap 7 and the drawer may also be of a different design, with a feature being provided in each case which ensures that coffee pads 4 cannot end up between the drawer edge 21 and the inner wall 26.

## Claims

1. Device for storing a number of parcels (4) made of filter paper of constant dimensions containing luxury foods, such as coffee or tea, comprising a container (3) in which the parcels are stacked on top of one another in a stack (S) and a first lid (1) for closing off the container in a more or less airtight manner, **characterized in that** the bottom of the container (3, 6) is provided with a removal opening with a top edge which is at the same level as the top of the bottommost parcel (4), as a result of which a parcel can be taken from the bottom of the stack (S).

2. Device according to Claim 1, in which the container (3) has a second lid (7) for closing off the removal opening in a more or less airtight manner.

3. Device according to Claim 1 or 2, in which the container (3, 6) is provided with a drawer (15, 21) which can move between a first position underneath the stack (S) and a second position in which the drawer is at least partially situated next to the stack and preferably partly protrudes from the removal opening so that the user can remove a parcel (4) from the drawer in the second position.

4. Device according to Claim 3, in which the drawer is provided with a drawer edge (21) having a height which corresponds to the thickness of the parcel (4) and with support means (12) for keeping the stack (S) above the drawer edge while the drawer is not in the first position.

5. Device according to Claim 4, in which the support means comprise a flat panel which adjoins the drawer edge (21).

6. Device according to Claim 4, in which the support means comprise a first flexible strip (12), which first flexible strip runs across the drawer edge (21) and is tensioned by means of a resilient element (27).

7. Device according to Claim 6, in which the resilient element (27) pulls the drawer (15, 21) into the first position.

8. Device according to one of the preceding claims, in which the second lid (7) is hingedly attached to the container (6) and is pushed into a closed position by a spring.

9. Device according to one of the preceding claims, in which coupling means (20) are provided for linking the movements of the second lid (7) and the drawer (15, 21).

10. Device according to Claim 9, in which the coupling means comprise a second flexible strip (20).
